# EUROPÄISCHE PATENTSCHRIFT

(11) **EP 1 034 696 B1**
(45) Veröffentlichungstag und Bekanntmachung des Hinweises auf die Patenterteilung: **26.06.2002**
(21) Anmeldenummer: 00104617.6
(22) Anmeldetag: 03.03.2000
(51) Int. Cl.: A01F 29/22, B24B 3/36, B24B 49/18

(54) **Schleifvorrichtung**
Grinding apparatus
Appareil de meulage

(30) Priorität: 11.03.1999 DE 19910757
(43) Veröffentlichungstag der Anmeldung: 13.09.2000
(73) Patentinhaber: DEERE & COMPANY, Moline, Illinois 61265-8098 (US)
(72) Erfinder: Nieschulze, Henrik, 29568 Wieren (DE)
(74) Vertreter: Holst, Sönke, Dr.

(56) Entgegenhaltungen:
- DE-B- 1 015 259
- GB-A- 2 028 191
- US-A- 3 748 786
- US-A- 4 640 059
- US-A- 4 834 303

## Beschreibung

Die Erfindung betrifft eine Schleifvorrichtung, mit einem Schleifstein, der an einer in einer ersten Richtung verschiebbar gelagerten Schleifsteinhalterung gehalten und mittels einer Zustelleinrichtung relativ zur Schleifsteinhalterung in einer zweiten, von der ersten Richtung unterschiedlichen Richtung bewegbar ist, um den Schleifstein einem Messer zuzustellen.

Im Stand der Technik sind unterschiedliche Schleifvorrichtungen für Messer bekannt geworden. In der gattungsbildenden US-A 4 834 303 ist eine Schleifvorrichtung für Messer eines Feldhäckslers offenbart, bei der ein Schleifstein in einer zylindrischen, mit einem Außengewinde versehenen Halterung montiert ist. Das Außengewinde ist in ein entsprechendes Gewinde eines Wagens eingeschraubt. Die Halterung ist drehmomentschlüssig mit einem Zahnrad verbunden. Der Wagen wird beim Schleifen über die Breite der Messer verschoben und beim Erreichen eines Umkehrpunktes stößt das Zahnrad gegen eine Klinke und dreht um einen Zahn weiter, so daß der Schleifstein aufgrund der Steigung des Gewindes den Messern zugestellt wird. Dabei dreht sich der Schleifstein mit, so daß nach jedem Zustellvorgang eine andere Teilfläche des Schleifsteins mit den Messern in Berührung kommt. Da sich der Schleifstein beim Schleifen abnutzt, entsteht eine Kerbe, die bei jedem Zustellvorgang gedreht wird, so daß anschließend nur eine geringer Anteil der Schleifsteinfläche mit den Messern in Berührung kommt. Die nachteilige Folge sind Vibrationen, hoher Verschleiß des Schleifsteins und ungleichmäßiges Schleifen.

Außerdem sind Schleifvorrichtungen bekannt (GB-A 2 028 191), bei denen ein Schleifstein an einem über die Breite der Messer verfahrbarem Wagen befestigt ist, und das Zustellen des Schleifsteins durch eine Bewegung der gesamten Halterungsvorrichtung des Wagens erfolgt. Hier erfolgt zwar keine Drehung des Schleifsteins beim Zustellen, jedoch ist der mechanische Aufbau recht aufwendig, da die gesamte Halterung unter Aufrechterhaltung der Parallelität zwischen Messern und der Bewegungsbahn des Schleifsteins zu verschieben ist.

Das der Erfindung zugrunde liegende Problem wird in den genannten Nachteilen des Standes der Technik gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, den Schleifstein relativ zur Schleifsteinhalterung ausschließlich verschiebbar, und nicht drehbar zu lagern. Auf diese Weise wird der Schleifstein beim Zustellen nur verschoben, aber nicht relativ zur Schleifsteinhalterung um seine Achse gedreht. Wegen der fehlenden Drehung hat die gesamte wirksame Fläche des Schleifsteins ständig Kontakt zur Schliffläche der Messer. Das vorteilhafte Ergebnis ist bei geringem konstruktivem Aufwand ein reduzierter Verschleiß des Schleifsteins, schnelleres Schleifen, eine bessere Schleifqualität und eine Verminderung der durch eine ungleichmäßige Oberfläche des Schleifsteins im Stand der Technik entstehenden Vibrationen.

Beim Zustellen muß der Schleifstein relativ zur Schleifsteinhalterung translatorisch verschoben werden. In der Regel wird jedoch (durch die Zustelleinrichtung) beim Zustellen eine Rotationsbewegung erzeugt, die in die Verschiebebewegung des Schleifsteins umzuwandeln ist. Für diese Umwandlung kommen verschiedene Einrichtungen in Betracht, wie z. B. eine endseitig mit einem drehenden Rad verbundene (Pleuel-)Stange, die anderen Endes den Schleifstein antreibt, oder ein beim Zustellen angetriebenes Zahnrad, das mit einer Zahnstange kämmt, die mit dem Schleifstein mechanisch in Verbindung steht. Bevorzugt ist jedoch, den Schleifstein an einem ersten Element mit einem ersten Gewinde zu befestigen, das mit einem mit der Zustelleinrichtung zusammenarbeitenden zweiten Gewinde eines zweiten Elements zusammenwirkt. Bei Drehung des zweiten Gewindes wird das erste Gewinde - und somit der Schleifstein - translatorisch bewegt, da sich das erste Gewinde nicht um seine Achse drehen kann. Bei geringem mechanischem Aufwand, aber hoher Zuverlässigkeit wird der Schleifsteins in gewünschter Weise verschoben. Dabei ist prinzipiell beliebig, ob das erste Gewinde ein Innen- oder Außengewinde ist.

In der Regel umfaßt die Zustelleinrichtung ein Nocken- oder Zahnrad, das an einer Endstellung (oder beiden Endstellungen) des Verschiebeweges der Schleifsteinhalterung um einen bestimmten Winkel gedreht wird. Das Nocken- oder Zahnrad kann in diesem Fall an einem zweiten Element fixiert sein, das relativ zur Schleifsteinhalterung drehbar gelagert ist. Die Drehung des Nocken- oder Zahnrades erfolgt vorzugsweise durch eine entsprechende Klinke, die ortsfest in der Nähe des Endpunktes des Verschiebeweges der Schleifsteinhalterung befestigt ist, beispielsweise an einem Gehäuse oder Rahmen der Schleifvorrichtung.

Weiterhin wird vorgeschlagen, daß der Schleifstein an einem ersten Element befestigt ist, das relativ zur Schleifsteinhalterung form- und/oder kraftschlüssig gegen Rotation gesichert, aber verschiebbar gelagert ist.

Zur kraftschlüssigen Arretierung kommt insbesondere eine Paßfeder in Frage, die zwischen dem Außenumfang des ersten Elements und einer es umschließenden Öffnung (z.B. Bohrung) der Schleifsteinhalterung in einer entsprechenden Aufnahme positioniert ist. Die Paßfeder erlaubt zwar ein Verschieben des ersten Elements relativ zur Schleifsteinhalterung, aber keine Rotation.

Alternativ oder zusätzlich kann das mit dem Schleifstein verbundene erste Element einen von der Kreisform abweichenden Außen- und/oder Innenquerschnitt aufweisen. In diesem Fall ist die Sicherung gegen Drehung formschlüssig, falls das erste Element mit dem nicht zylindrischen Bereich, der insbesondere flach sein kann, an der Schleifsteinhalterung verschiebbar anliegt. Denkbar wäre auch, daß das erste Element nicht direkt an der Schleifsteinhalterung, sondern an einem mit ihr verbundenen Element anliegt. Während eine formschlüssige Arretierung aus fertigungstechnischen Gründen aufwendiger als eine kraftschlüssige Arretierung ist, wird sie geeignet sein, auch höhere Drehmomente aufzunehmen, wie sie beim seitlichen Verschieben des Schleifsteins von einer Messerreihe zur benachbarten Messerreihe auftreten. Es kann auch eine formschlüssige mit einer kraftschlüssigen Arretierung kombiniert werden.

Bei formschlüssiger Arretierung kann ein flacher Teilbereich des ersten Elements zwischen einer Wand der Schleifsteinhalterung und einer mit der Schleifsteinhalterung verbundenen Drehsicherungsplatte angeordnet sein, oder alternativ oder zusätzlich zwischen Stegen der Schleifsteinhalterung positioniert werden. Dadurch erfolgt eine hinreichende Sicherung gegen Drehung.

Weiterhin ist empfohlen, die Zustellvorrichtung ein- und ausschaltbar zu gestalten, indem man die Schleifsteinhalterung in unterschiedliche Endstellungen verfährt. In einer ersten Endstellung wird die Zustelleinrichtung betätigt und der Schleifstein näher an die zu schärfenden Messer verfahren, und in einer zweiten Endstellung erfolgt keine Zustellung. Beim letztgenannten Schlichten wird die Schleifsteinhalterung somit in die zweite Endstellung verbracht, während sie beim normalen Schleifen in die erste Endstellung gefahren wird, in der ein Zustellen des Schleifsteins erfolgt. Auf einfache Weise und bei unproblematischer mechanischer Realisierbarkeit durch geeignete Ansteuerung eines die Schleifsteinhalterung antreibenden (Elektro-)Motors wird ein optimales Schleifen mit anschließendem Schlichten durchgeführt. Die genannten unterschiedlichen Endstellungen der Schleifsteinhalterung können auf nur einer Seite der Messer, oder beidseits der Messer realisiert werden.

Die Steuerung des Verschiebeweges kann beispielsweise über die Anzahl an den Motor angelegter Aktivierungsimpulse (insbesondere bei einem Schrittmotor) oder eine Zeitdauer, während der eine Betriebsspannung an den Motor angelegt wird oder eine Detektion der Position der Schleifsteinhalterung bzw. einer vom Motor translatorisch und/oder rotativ angetriebenen Welle und entsprechende Steuerung des Motors erfolgen. Somit ist leicht steuerbar, ob ein Zustellen des Schleifsteins erfolgt - oder nicht. Anzumerken ist, daß die Schleifsteinhalterung nach Erreichen der Endstellung in umgekehrter Richtung zu verschieben ist, was durch Umkehren der Bewegungsrichtung des Motors erfolgen kann; beispielsweise wäre ein Gleichstrommotor lediglich umzupolen.

In der Regel wirkt die Zustelleinrichtung der Schleifsteinhalterung in der ersten Endstellung mit einer Vorrichtung zur Betätigung der Zustelleinrichtung zusammen, insbesondere einer ein Zahnrad drehenden Klinke. Die zweite Endstellung wird dann derart gewählt, daß noch keine Wechselwirkung zwischen der Vorrichtung zur Betätigung der Zustelleinrichtung und der Zustelleinrichtung eintritt, so daß die Zustellung unterbleibt.

Die vorliegende Erfindung ist an einer Vielzahl von Einrichtungen mit zu schärfenden Messern verwendbar. Sie kann insbesondere an selbstfahrenden oder gezogenen Erntemaschinen mit Häckseltrommeln benutzt werden.

In den Zeichnungen sind zwei nachfolgend näher beschriebene Ausführungsbeispiele der Erfindung dargestellt. Es zeigt:
- Fig. 1: eine Erntemaschine mit einer Häckseltrommel mit Schleifvorrichtung in Seitenansicht und in schematischer Darstellung,
- Fig. 2a: eine Frontansicht einer Schleifvorrichtung in den während des Schleifens eingenommenen Endpositionen,
- Fig. 2b: die Schleifvorrichtung in den Positionen beim Schlichten,
- Fig. 2c: die Schleifvorrichtung in Ruheposition,
- Fig. 3: eine teilgeschnittene vertikale Seitenansicht einer Schleifvorrichtung quer zu ihrer Bewegungsrichtung,
- Fig. 4: eine Draufsicht auf die Schleifvorrichtung,
- Fig. 5: eine teilgeschnittene vertikale Ansicht einer ersten Ausführungsform einer Schleifsteinhalterung,
- Fig. 6: eine Draufsicht auf die Schleifsteinhalterung in Figur 5,
- Figur 7: eine teilgeschnittene vertikale Ansicht einer zweiten Ausführungsform einer Schleifsteinhalterung, und
- Figur 8: eine Draufsicht auf die Schleifsteinhalterung der Figur 7.

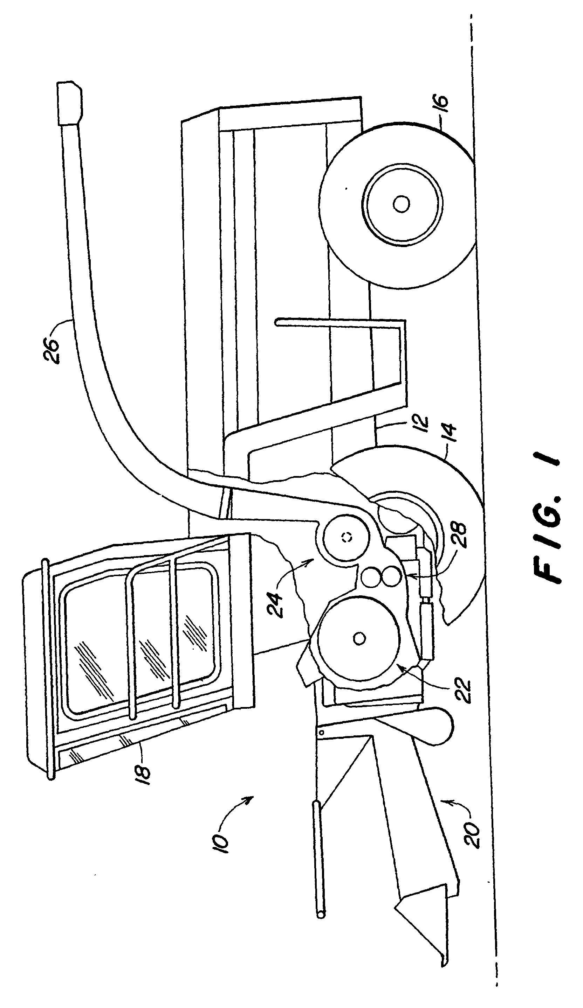

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist. Die Lage der Nachzerkleinerungsvorrichtung 28 ist jedoch nicht entscheidend, so daß sie auch stromabwärts der Fördervorrichtung 24 vorgesehen werden kann.

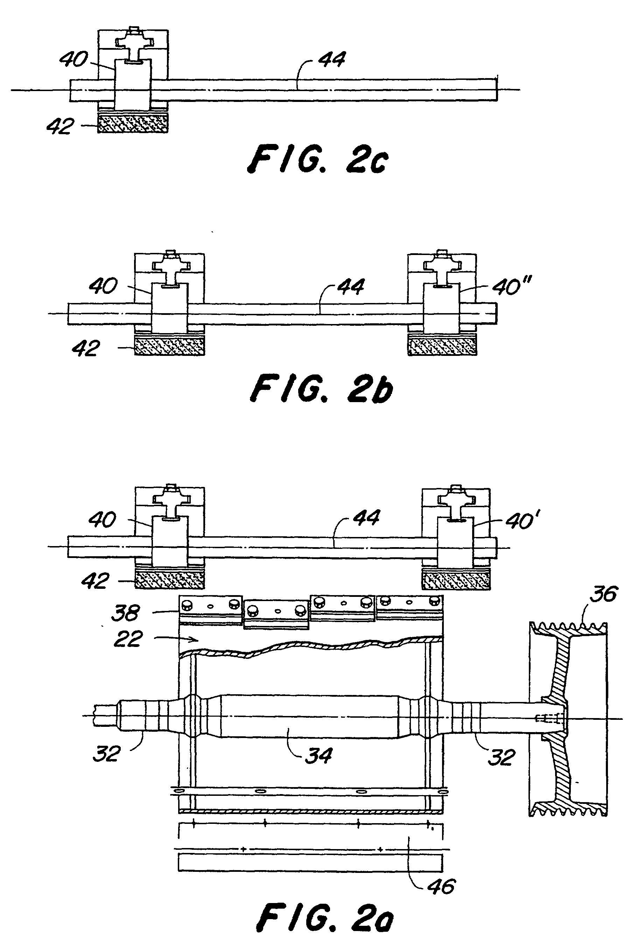

In Figur 2a ist schematisch eine Ansicht einer Häckseltrommel 22 und einer ihr zugeordneten Schleifvorrichtung wiedergegeben, wie sie sich bei einer Betrachtung der Erntemaschine 10 in Figur 1 (bezüglich der Bewegungsrichtung) von vorn ergibt. Die Häckseltrommel 22 weist ein Anzahl über ihre Breite und ihren Umfang verteilter Messer 38 auf, die in Zusammenwirken mit einer starren Gegenschneide 46 durch die Erntegutaufnahmeeinrichtung 20 aufgenommenes Erntegut zerteilt. Die Häckseltrommel 22 umfaßt eine zentrale Welle 32, die über eine Stirnseite der Riemenscheibe 36 und nicht dargestellte Riemen durch einen Motor der Erntemaschine 10 rotativ antreibbar ist. Die Welle 34 stützt sich durch zwei beidseits der Häckseltrommel 22 angeordnete Lager am Rahmen 12 der Erntemaschine 10 ab. Bei der Häckseltrommel 22 ist einerseits der Abstand von der Gegenschneide 46, andererseits die Schärfe der Messer 38 kritisch. Ist der Abstand von der Gegenschneide 46 zu gering, können die Messer 38 beschädigt werden, ist er zu groß, kann das eingebrachte Erntegut nicht richtig zerkleinert werden. Die vorliegende Erfindung bezieht sich auf die zweitgenannte Problematik, die Schärfe der Messer 38. Um nach einer bestimmten Betriebsdauer die Messer 38 schärfen zu können, ohne die einzelnen Messer 38 oder die gesamte Häckseltrommel 22 ausbauen zu müssen, ist oberhalb der Häckseltrommel 22 nahe des von den Messern 38 beschriebenen Hüllkreises eine Schleifvorrichtung vorgesehen, die im wesentlichen einen Schleifstein 42, eine diesem zugeordnete Schleifsteinhalterung 40 und eine Achse 44 umfaßt, auf der die Schleifsteinhalterung 40 verschiebbar gelagert ist.

Die Figuren 2a bis 2c dienen der Verdeutlichung der Arbeitsweise der Schleifvorrichtung. Sollen die Messer 38 geschärft werden, wird die Häckseltrommel 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigtem Schleifstein 42 wird aus einer in Figur 2c dargestellten Ruheoder Parkposition, in der sie seitlich neben der Häckseltrommel 22 angeordnet ist, über die gesamte Breite der Häckseltrommel 22 verschoben. Dabei ist die Unterseite des Schleifsteins 22 in Kontakt mit den Messern 38, und schärft sie. Ein Schleifvorgang läuft derart ab, daß der Schleifstein 42 mehrere Male über die Breite der Häckseltrommel 22 verfahren wird. Die Endpunkte dieser Verschiebebewegung sind in der Figur 2a durch die Schleifsteinhalterungen mit den Bezugsziffern 40 am linken Umkehrpunkt und 40' am rechten Umkehrpunkt dargestellt. Es ist einstellbar, wie weit die Umkehrpunkte über die Häckseltrommel 22 hinaus gehen. Zwischen den Verschiebebewegungen bleibt die Schleifsteinhalterung mit dem Schleifstein 42 in der Regel für eine bestimmte Zeitdauer in den Endpositionen stehen, um der Tatsache Rechnung zu tragen, daß an den Außenseiten der Häckseltrommel 22 weniger Erntematerial als in der Mitte zu verarbeiten ist, so daß die Messer 38 in den Außenbereichen weniger abnutzen. Aus diesem Grunde sind sie dort entsprechend länger zu schärfen, um wieder einen über die gesamte Breite der Häckseltrommel 22 konstanten Hüllkreisdurchmesser der Messer 38 zu schaffen. Diese Zeitdauer ist auch einstellbar. Zwischen den Verschiebebewegungen, an den Umkehrpunkten, erfolgt ein Zustellen des Schleifsteins 42, also eine geringfügige Bewegung des Schleifsteins 42 auf die Messer 38 zu. Nach dem eigentlichen Schleifen wird der Schleifvorgang durch das sogenannte Schlichten (Finishen) vollendet. Dabei wird der Schleifstein 42 nicht mehr zugestellt, sondern verbleibt in seiner Position. Dieser Vollendungsvorgang erfolgt mit mehreren Verschiebungen des Schleifsteins 42 zwischen den in Figur 2b dargestellten Endpositionen. Die Zahl der Verschiebungen ist variabel, typischerweise werden fünf Verschiebevorgänge durchgeführt. Der rechte Umkehrpunkt der Schleifsteinhalterung 40' mit dem Schleifstein 42 in Figur 2b ist etwas weiter links als der in Figur 2a (d.h. während des normalen Schleifens) mit der Bezugsziffer 40'' gekennzeichnete, was zur Folge hat, daß am rechten Umkehrpunkt in Figur 2b kein Zustellen des Schleifsteins 42 mehr erfolgt, im Gegensatz zur Figur 2a. Eine nähere Beschreibung des Zustellvorgangs wird weiter unten gegeben. Bezüglich der Figuren 2a, 2b und 2c ist noch anzumerken, daß die Schleifvorrichtung stets in einer vertikalen Höhe über der Häckseltrommel 22 angebracht ist, wie in Figur 2a dargestellt; sie ist nur zu Illustrationszwecken in den Figuren 2b und 2c nach oben versetzt.

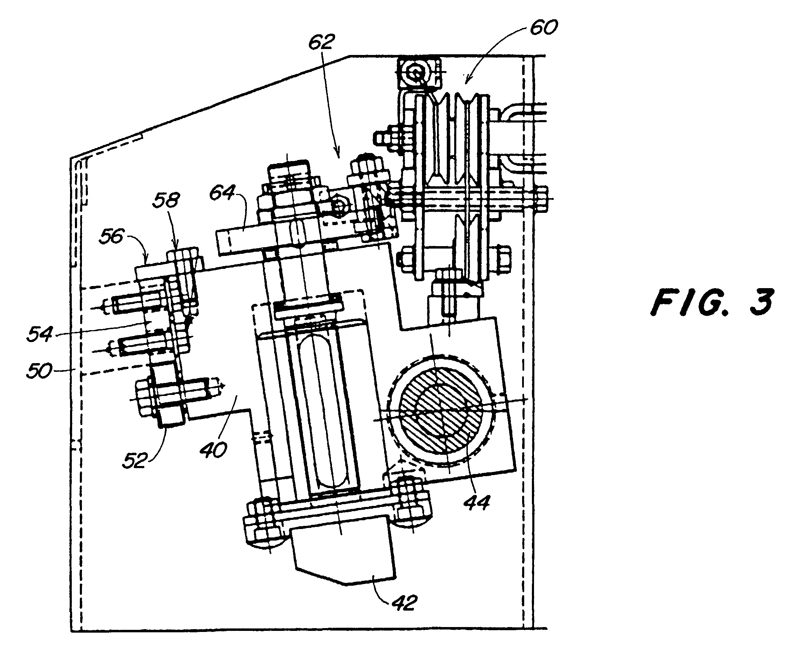

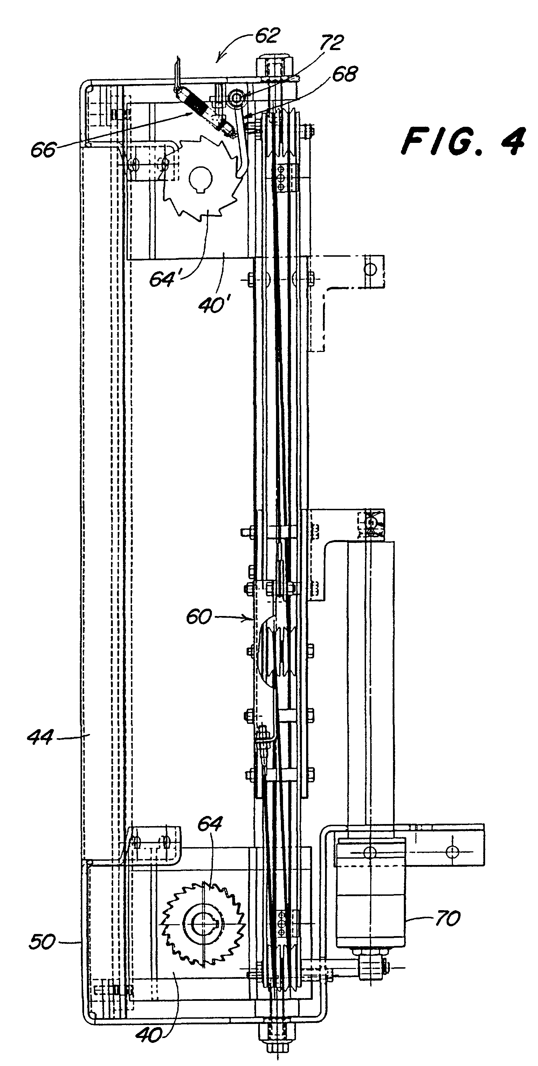

In Figur 3 ist eine teilweise geschnittene Ansicht der Schleifsteinhalterung 40 quer zu ihrer Bewegungsrichtung wiedergegeben. Die Schleifsteinhalterung 40 stützt sich zum einen auf der Achse 44 ab, zum anderen an einer Schiene 54, die mit einem Gehäuse oder Rahmen 50 der Schleifvorrichtung verbunden ist. Die Schiene 54 ist in etwa vertikaler Richtung zwischen mit der Schleifsteinhalterung 40 verbundenen Kugellagern 52 und einer ebenfalls mit der Schleifsteinhalterung 40 verbundenen Gegenhalterplatte 56 angeordnet. Beim Schleifen wirkt eine nach oben gerichtete Kraft gegen den Schleifstein 42, der die Schleifsteinhalterung 40 gegen die Achse 44 und das Kugellager 52 gegen die Schiene 54 drückt. Um ihre Lebensdauer zu verlängern und unerwünschte Kippmomente zu unterbinden, können mindestens zwei Kugellager 52 in einer zur Zeichenebene der Figur 3 senkrechten Richtung übereinander angeordnet werden, d. h. in Längsrichtung der Schiene 54 nebeneinander. Die Gegenhalterplatte 56 ist über mehrere (beispielsweise zwei) Schrauben 58, von denen nur eine dargestellt ist, mit der Schleifsteinhalterung 40 verbunden, und dient im wesentlichen dazu, ein Kippen der Schleifsteinhalterung 40 um die Achse 44 im Gegenuhrzeigersinn zu verhindern, wenn gerade kein Schleifvorgang durchgeführt wird, z. B. in der Parkposition. Zum Verschieben der Schleifsteinhalterung 40 über die Breite der Häckseltrommel 22 ist eine Seilzugeinrichtung 60 vorgesehen, die an sich bekannt ist und daher keiner näheren Erläuterung bedarf. Es wäre alternativ auch denkbar, die Schleiftsteinhalterung 40 über eine umlaufende, durch einen Motor angetriebene Kette zu bewegen. Außerdem ist in Figur 3 eine Zustelleinrichtung 62 dargestellt, die ein Zahnrad 64 aufweist. Die Funktion der Zustelleinrichtung 62, die den Schleifstein 42 in der in Figur 2a mit dem Bezugszeichen 40' gekennzeichneten Position der Häckseltrommel 22 zustellt, wird anhand der Figuren 4 bis 8 erläutert.

In Figur 4 ist eine Ansicht der Schleifvorrichtung von oben wiedergegeben. Es ist schematisch angedeutet, daß die Schleifsteinhalterung 40 zwischen der unten eingezeichneten Parkposition und der oben eingezeichneten (in Figur 2a rechten) Umkehrposition, in der die zweite eingezeichnete Schleifsteinhalterung mit dem Bezugszeichen 40' gekennzeichnet ist, verschiebbar ist. Die Seilzugeinrichtung 60 mit einem Seil und einem elektrisch angetriebenem Linearmotor 70 ist ebenfalls wiedergegeben. Außerdem sind weitere Bestandteile der Zustelleinrichtung 62 an der oben eingezeichneten Umkehrposition der Schleifsteinhalterung 40 vorgesehen. Die Zustelleinrichtung 62 umfaßt neben dem Zahnrad 64 eine Klinke 68, die am Rahmen 50 um eine Drehachse 72, die senkrecht zur Zeichenebene verläuft, schwenkbar angebracht ist und durch eine Feder 66 in einer Ruheposition gehalten wird. Die Klinke 68 ist derart angebracht, daß sie gegen das Zahnrad 64 der Schleifsteinhalterung 40' stößt, wenn sich letztere ihrer (in Figur 4 oben eingezeichneten) Umkehrposition nähert, und das Zahnrad 64' um einen Zahn im Uhrzeigersinn dreht. Die Klinke 68 und das Zahnrad 64 sind so geformt, daß die Spitze der Klinke 68 zunächst in das Tal zwischen zwei Zähnen des Zahnrades 64 eingreift, und nach einem bestimmten Drehwinkel von der an außen ansteigenden Flanke des folgenden Zahnes entgegen der Kraft der Feder 66 nach außen gedrückt wird. Die Flanken der Zähne des Zahnrades 64 sind sägezahnförmig unsymmetrisch gestaltet, um ein Eingreifen und Ausrasten der Klinke 68 zu erleichtern. Der Drehwinkel des Zahnrades 64 beträgt 360° dividiert durch die Zahl der Zähne, die in Figur 4 zwölf ist; also wird das Zahnrad 64 jeweils um 30° im Uhrzeigersinn gedreht. Im Ergebnis wird das Zahnrad 64 jeweils um einen Zahn im Uhrzeigersinn gedreht, wenn die Schleifsteinhalterung 40 ihre (in Figur 4 oben eingezeichnete) Umkehrposition erreicht. Durch eine geeignete Mechanik wird die Drehung des Zahnrades 64 in eine Zustellbewegung des Schleifsteins 42 umgesetzt, was anhand der folgenden Figuren erläutert wird. Wenn die Schleifsteinhalterung 40 nicht ganz in die Umkehrposition verfahren wird, sondern die Verschiebebewegung kurz davor unterbrochen wird, wie in Figur 2b angedeutet, kommt die Klinke 68 nicht in Kontakt mit dem Zahnrad 64, und die Zustellung des Schleifsteins 42 unterbleibt, wie beim Finishen erforderlich. Das Zahnrad 64 kann gegen andere Zahnräder mit abweichender Zähnezahl austauschbar sein, um den Drehwinkel und somit den Zustellweg beispielsweise zur Anpassung an das Material des Schleifsteins 42 und der Messer 38 variieren zu können.

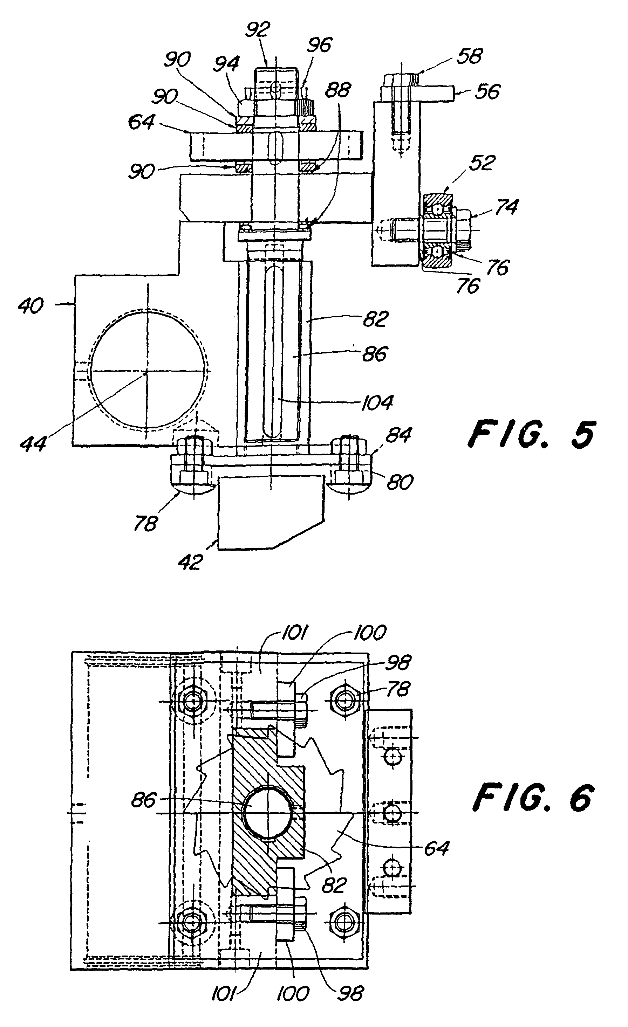

In den Figuren 5 und 6 ist eine Schleifsteinhalterung 40 gemäß einer ersten Ausführungsform der Erfindung in einer teilgeschnittenen Ansicht wiedergegeben. Der Schleifstein 42 ist an der Unterseite der Schleifsteinhalterung 40 an einer ersten Platte 80 in der Regel durch Klebestoff fixiert. Die erste Platte 80 ist an ihren vier Ecken durchbohrt, und durch die Löcher erstrecken sich Schrauben 78, durch die erste Platte 80 an einer zweiten Platte 84 lösbar befestigt ist. Dazu dienen Muttern oberhalb der zweiten Platte 84. Die zweite Platte 84 ist mit einem blockförmigen ersten Element 82 verbunden, das sich in vertikaler Richtung nach oben erstreckt und mit einem Innengewinde versehen ist. Das erste Element 82 ist relativ zur Schleifsteinhalterung 40 in vertikaler Richtung verschiebbar gelagert, und formschlüssig gegen eine Drehung relativ zur Schleifsteinhalterung 40 gesichert. Dazu dienen Drehsicherungsplatten 100 und Stege 101, die in Figur 6 erkennbar sind und in bezug auf diese Figur noch erläutert werden. Zur vertikalen Verstellung des ersten Elements 82 und des damit verbundenen Schleifsteins 42 dient ein längliches zweites Element 86 mit Außengewinde, das in das Innengewinde des ersten Elements 82 hineingeschraubt ist. Bei beiden Gewinden handelt es sich hier um Linksgewinde; sollen Rechtsgewinde Verwendung finden, ist die Drehrichtung des Zahnrades 64 umzukehren, was durch Umdrehen des Zahnrades 64 und Umpositionieren der Klinke 68 erfolgen kann. Bei einer Drehung des zweiten Elements 86 wird das erste Element 82 durch das Gewinde in vertikaler Richtung verschoben. Das zweite Element 86 ist durch Kugellager 88 relativ zur Schleifsteinhalterung 40 drehbar, aber nicht verschiebbar gelagert, und an seinem, dem ersten Element 82 gegenüberliegenden Oberteil 92 starr (und somit drehmomentschlüssig) mit dem Zahnrad 64 verbunden. Dazu dienen ober- und unterhalb des Zahnrades 64 angeordnete Unterlegscheiben 90, eine Mutter 94 und eine mit einem Splint gesicherte Kronenmutter 96, die das Zahnrad 64 starr mit dem Oberteil 92 des zweiten Elements 86 verbinden. Im Ergebnis dreht sich bei Rotation des Zahnrades 64 das gesamte zweite Element 86, so daß sich das Außengewinde des zweiten Elements 86 relativ zum Innengewinde des ersten Elements 80 dreht und letzteres in vertikaler Richtung verschoben, aber aufgrund seiner in Figur 6 dargestellten Drehsicherung nicht gedreht wird. In Figur 5 ist weiterhin die Befestigung der Gegenhalterplatte 56 an der Schleifsteinhalterung 40 mit einer Schraube 58, und die Fixierung des Kugellagers 52 an der Schleifsteinhalterung über eine Schraube 74 und Unterlegscheiben 76 erkennbar.

Anhand der in Figur 6 dargestellten Draufsicht auf die Schleifsteinhalterung 40 der Figur 5 ist der Querschnitt des schraffierten ersten Elements 82 erkennbar, das mit einer (links eingezeichneten) Fläche an einer ebenfalls ebenen Wand der Schleifsteinhalterung 40 anliegt. An der dieser Fläche gegenüberliegenden Seite weist das erste Element 82 drei stufenartig ausgeformte Abschnitte unterschiedlichen Abstands von der genannten Wand der Schleifsteinhalterung 40 auf, von denen der mittlere das zweite Element 86 aufnimmt, und daher weiter von der Wand beabstandet ist, während die beiden äußeren (oberen und unteren) Abschnitte flacher sind, also näher an der Wand liegen. Das erste Element 82 weist somit einen Querschnitt auf, der einem liegenden T entspricht. An den äußeren Abschnitten des ersten Elements 82 liegen die oben erwähnten Drehsicherungsplatten 100 an, die durch Schrauben 98 mit der Schleifsteinhalterung 40 verbunden sind. Das erste Element 82 ist somit in der Schleifsteinhalterung 40 in der zur Zeichenebene der Figur 6 senkrechten Richtung verschiebbar gelagert und durch die Drehsicherungsplatten 100 in (bezüglich der Figur 6) horizontaler Richtung gegen Drehung gesichert. In vertikaler Richtung erfolgt die Führung durch die Kugellager 88 und durch Stege 101 der Schleifsteinhalterung 40 ober- und unterhalb des ersten Elements 82, in die die Schrauben 98 eingreifen, mit denen die Drehsicherungsplatten 100 befestigt sind. Durch Schmiernippel im ersten Element 82 und der Schleifsteinhalterung 40 kann die Leichtgängigkeit der Gewindedrehung und der Verschiebung des ersten Elements 82 unterstützt werden.

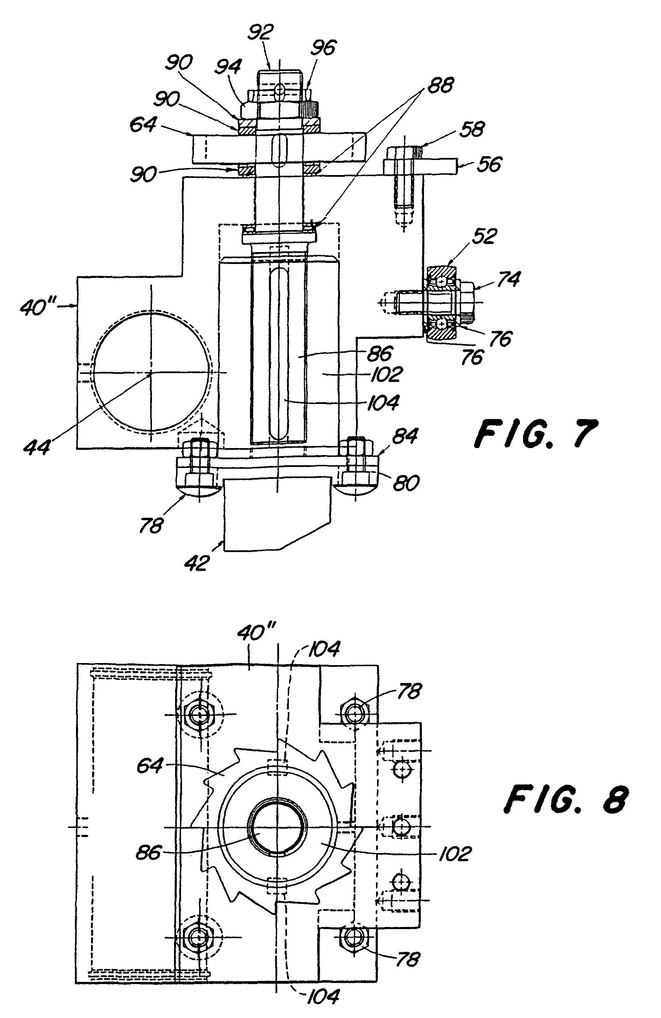

In den Figuren 7 und 8 ist eine zweite Ausführungsform einer Schleifsteinhalterung 40'' wiedergegeben. Der Schleifstein 42 ist an einer ersten Platte 80 befestigt, die durch Schrauben 78 und Muttern an einer zweiten Platte 84 fixiert ist. An der zweiten Platte 84 ist ein sich in Figur 7 vertikal nach oben erstreckendes, kreiszylindrisches erstes Element 102 mit Innengewinde angebracht, in das - wie in Figur 5 - das Außengewinde eines zweiten Elements 86 eingeschraubt ist. Das zweite Element 86 und seine Befestigung an der Schleifsteinhalterung 40'' über Kugellager 88 sowie die Befestigung am Zahnrad 64 ist identisch mit dem in Figur 5 gezeigten zweiten Element 86 nach der ersten Ausführungsform der Erfindung. Die Schleifsteinhalterung 40'' gemäß der zweiten Ausführungsform unterscheidet sich von der ersten Ausführungsform hinsichtlich der Arretierung des ersten Elements 102 (und des Schleifsteins 42) gegen Drehung: In den Außenumfang des zylindrischen ersten Elements 102 und/oder in den Innenumfang des das erste Element 102 umschließenden Bereichs der Schleifsteinhalterung 40 können zwei sich diametral gegenüberliegende Paßfederaufnahmen 104 eingebracht sein, d.h. sich in Figur 7 in vertikaler Richtung erstreckende Nuten, in die eine (nicht eingezeichnete) Paßfeder eingelegt ist. Die Paßfeder erlaubt ein Verschieben des ersten Elements 102 relativ zur Schleifsteinhalterung 40'' in vertikaler Richtung (bezüglich Figur 8), jedoch keine Drehung um die Achse des ersten Elements 102. Auch in dieser Ausführungsform können Einrichtungen zum Schmieren des ersten Elements 102 in seiner Gleitlagerung und des Gewindes vorgesehen sein. Im Ergebnis verschiebt sich das erste Element 102 mit dem Schleifstein 42 bei einer Drehung des Zahnrades 64 nach unten, dreht sich aber nicht um seine Achse.

Bei beiden Ausführungsformen der Erfindung ist somit ein Zustellen des Schleifsteins 42 zu den Messern durch Drehung des Zahnrads 64 möglich, ohne daß sich der Schleifstein 42 dreht. Daher hat stets die gesamte Fläche des Schleifsteins 42 Kontakt mit der zu schleifenden Fläche der Messer 38.

## Patentansprüche

1. Schleifvorrichtung, mit einem Schleifstein (42), der an einer in einer ersten Richtung verschiebbar gelagerten Schleifsteinhalterung (40) gehalten und mittels einer Zustelleinrichtung (62) relativ zur Schleifsteinhalterung (40) in einer zweiten, von der ersten Richtung unterschiedlichen Richtung bewegbar ist, um den Schleifstein (42) einem Messer (38) zuzustellen, **dadurch gekennzeichnet, daß** der Schleifstein (42) durch die Zustelleinrichtung (62) ausschließlich verschoben wird.

2. Schleifvorrichtung nach Anspruch 1, **dadurch gekennzeichnet, daß** der Schleifstein (42) an einem ersten Element (82,102) mit einem ersten Gewinde befestigt ist, das mit einem mit der Zustelleinrichtung (62) zusammenarbeitenden zweiten Gewinde zusammenwirkt, das beim Zustellen in Rotation versetzt wird.

3. Schleifvorrichtung nach einem Ansprüche 1 oder 2, **dadurch gekennzeichnet, daß** die Zustelleinrichtung (62) ein Nocken- oder Zahnrad (64) umfaßt, das an wenigstens einer Endstellung des Verschiebeweges der Schleifsteinhalterung (40) insbesondere durch eine Klinke (68) gedreht wird.

4. Schleifvorrichtung nach Anspruch 3, **dadurch gekennzeichnet, daß** das Nocken- oder Zahnrad (64) an einem zweiten Element (86) befestigt ist, das relativ zur Schleifsteinhalterung (40) drehbar gelagert ist.

5. Schleifvorrichtung nach einem der vorhergehenden Ansprüche, **dadurch gekennzeichnet, daß** der Schleifstein (42) an einem ersten Element (82,102) befestigt ist, das relativ zur Schleifsteinhalterung (40) form- und/oder kraftschlüssig gegen Rotation gesichert, aber verschiebbar ist.

6. Schleifvorrichtung nach Anspruch 5, **dadurch gekennzeichnet, daß** das erste Element (102) durch eine Paßfeder gegen Rotation gesichert ist.

7. Schleifvorrichtung nach Anspruch 6, **dadurch gekennzeichnet, daß** die Paßfeder zwischen dem Außenumfang des ersten Elements (102) und einer es umschließenden Öffnung, insbesondere Bohrung, der Schleifsteinhalterung (40) in einer Paßfederaufnahme (104) angeordnet ist.

8. Schleifvorrichtung nach einem der Ansprüche 5 bis 7, **dadurch gekennzeichnet, daß** das erste Element (82) einen von der Kreisform abweichenden Außen- und/oder Innenquerschnitt aufweist, mit dem das erste Element (82) an der Schleifsteinhalterung (40) verschiebbar anliegt.

9. Schleifvorrichtung nach Anspruch 8, **dadurch gekennzeichnet, daß** ein Teilbereich des ersten Elements (82) flach ist.

10. Schleifvorrichtung nach Anspruch 9, **dadurch gekennzeichnet, daß** der flache Teilbereich des ersten Elements (82) zwischen einer Wand der Schleifsteinhalterung (40) und einer mit der Schleifsteinhalterung (40) verbundenen Drehsicherungsplatte (100) angeordnet ist.

11. Schleifvorrichtung nach Anspruch 9 oder 10, **dadurch gekennzeichnet, daß** das erste Element (82) zwischen Stegen (101) der Schleifsteinhalterung (44) angeordnet ist.

12. Schleifvorrichtung nach einem der vorhergehenden Ansprüche, **dadurch gekennzeichnet, daß** die Zustelleinrichtung (62) durch Steuerung der Endstellung des Verschiebeweges der Schleifsteinhalterung (40) ein- und ausschaltbar ist.

13. Schleifvorrichtung nach Anspruch 12, **dadurch gekennzeichnet, daß** die Schleifsteinhalterung (40) in eine erste Endstellung (40') und eine zweite Endstellung (40'') verschiebbar ist, und die Zustelleinrichtung (62) in der ersten Endstellung (40') aktiviert wird, aber in der zweiten Endstellung (40'') nicht aktiviert wird.

14. Schleifvorrichtung nach Anspruch 12 oder 13, **dadurch gekennzeichnet, daß** die Schleifsteinhalterung (40) in der ersten Endstellung (40'), jedoch nicht in der zweiten Endstellung (40''), mit einer Vorrichtung zur Betätigung der Zustelleinrichtung (62) wechselwirkt.

15. Schleifvorrichtung nach einem der Ansprüche 12 bis 14, **dadurch gekennzeichnet, daß** die Steuerung des Verschiebeweges über die Anzahl an einen Elektromotor (70) angelegter Aktivierungsimpulse und/oder eine Zeitdauer, während der eine Betriebsspannung an den Motor (70) angelegt wird und/oder eine Detektion der Position der Schleifsteinhalterung und/oder einer vom Motor (70) rotativ und/oder translatorisch angetriebenen Welle und entsprechende Steuerung des Motors (70) erfolgt.

16. Schleifvorrichtung nach einem der vorhergehenden Ansprüche, **dadurch gekennzeichnet, daß** der Schleifstein (42) in vertikaler Richtung zugestellt wird.

17. Erntemaschine, insbesondere selbstfahrender oder gezogener Feldhäcksler, mit einer Häckseltrommel (22) und einer Schleifvorrichtung nach einem der Ansprüche 1 bis 16.

## Claims

1. Sharpening apparatus with a grindstone (42) which is retained on a grindstone holder (40) mounted to move in a first direction and which is movable relative to the grindstone holder (40) in a second direction, different from the first, by means of an in-feed device (62), in order to feed the grindstone (42) in to a blade (38), **characterized in that** the grindstone (42) is only translated by the in-feed device (62).

2. Sharpening apparatus according to claim 1, **characterized in that** the grindstone (42) is fixed on a first element (82, 102) with a first thread, which cooperates with a second thread which works together with the in-feed device (62) and is rotated during in-feeding.

3. Sharpening apparatus according to claim 1 or 2, **characterized in that** the in-feed device (62) comprises a cam wheel or gearwheel (64), which is turned at at least one end position of the path of displacement of the grindstone holder (40), especially by a pawl (68).

4. Sharpening apparatus according to claim 3, **characterized in that** the cam wheel or gearwheel (64) is fixed on a second element (86) which is mounted rotatably relative to the grindstone holder (40).

5. Sharpening apparatus according to any of the preceding claims, **characterized in that** the grindstone (42) is fixed on a first element (82, 102) which is secured against rotation relative to the grindstone holder (40) positively and/or non-positively but can be translated relative thereto.

6. Sharpening apparatus according to claim 5, **characterized in that** the first element (102) is secured against rotation by a key.

7. Sharpening apparatus according to claim 6, **characterized in that** the key is arranged in a key-way (104) between the outer periphery of the first element (102) and an opening surrounding it, especially a bore, of the grindstone holder (40).

8. Sharpening apparatus according to any of claims 5 to 7, **characterized in that** the first element (82) has an outer and/or inner cross-section deviating from a circular shape, wherewith the first element (82) engages slidably on the grindstone holder (40).

9. Sharpening apparatus according to claim 8, **characterized in that** a part region of the first element (82) is flat.

10. Sharpening apparatus according to claim 9, **characterized in that** the flat part region of the first element (82) is arranged between a wall of the grindstone holder (40) and a plate (100) securing against rotation attached to the grindstone holder (40).

11. Sharpening apparatus according to claim 9 or 10, **characterized in that** the first element (82) is arranged between ribs (101) of the grindstone holder (44).

12. Sharpening apparatus according to any of the preceding claims, **characterized in that** the in-feed device (62) can be switched on and off by control over the end position of the path of translation of the grindstone holder (40).

13. Sharpening apparatus according to claim 12, **characterized in that** the grindstone holder (40) can be shifted into a first end position (40') and a second end position (40") and the in-feed device (62) is activated in the first end position (40') but is not activated in the second end position (40").

14. Sharpening apparatus according to claim 12 or 13, **characterized in that** the grindstone holder (40) interacts with a device for actuating the in-feed device (62) in the first end position (40') but not in the second end position (40").

15. Sharpening apparatus according to any of claims 12 to 14, **characterized in that** the control over the path of translation is effected through the number of activating pulses applied to an electric motor (70) and/or a time duration during which an operating voltage is applied to the motor (70) and/or detection of the position of the grindstone holder and/or a shaft driven in rotation and/or translation by the motor (70) and corresponding control of the motor (70).

16. Sharpening apparatus according to any of the preceding claims, **characterized in that** the grindstone (42) is fed in in the vertical direction.

17. A harvesting machine, especially a self-propelled or towed forage harvester with a chopper drum (22) and a sharpening apparatus according to any of claims 1 to 16.

## Revendications

1. Dispositif de meulage comportant une meule (42), qui est fixée à un dispositif (40) de retenue de la meule, monté de manière à pouvoir être déplaçable dans une direction, et déplaçable à l'aide d'un dispositif d'avance (22) par rapport au dispositif (30) de retenue de la meule, dans une seconde direction différente de la première direction, de manière à avancer la meule (42) vers un couteau (38), **caractérisé en ce que** la meule (42) est déplacée exclusivement par le dispositif d'avance (62).

2. Dispositif de meulage selon la revendication 1, **caractérisé en ce que** la meule (42) est fixée à un premier élément (82,102) comportant un premier filetage, qui coopère avec un second filetage qui coopère avec le dispositif d'avance (62) et est entraîné en rotation lors du mouvement d'avance.

3. Dispositif de meulage selon l'une des revendications 1 ou 2, **caractérisé en ce que** le dispositif d'avance (62) comporte une roue à came ou un pignon (64), que notamment un cliquet (68) fait pivoter dans au moins une position finale du trajet de trasnlation du dispositif (40) de retenue de la meule.

4. Dispositif de meulage selon la revendication 3, **caractérisé en ce que** la roue à came ou le pignon (64) est fixé sur un second élément (86), qui est monté de manière à pouvoir tourner par rapport au dispositif (40) de retenue de la meule.

5. Dispositif de meulage selon l'une des revendications précédentes, **caractérisé en ce que** la meule (42) est fixée sur un premier élément (82,102) qui est bloqué contre toute rotation selon une liaison par formes complémentaires et/ou selon une liaison de force, mais est translatable.

6. Dispositif de meulage selon la revendication 5, **caractérisé en ce que** le premier élément (102) est bloqué contre toute rotation par une clavette parallèle.

7. Dispositif de meulage selon la revendication 6, **caractérisé en ce que** la clavette parallèle est disposée entre la périphérie extérieure du premier élément (102) et une ouverture enveloppante, notamment un perçage, du dispositif (40) de retenue de la meule dans un logement (104) pour la clavette parallèle.

8. Dispositif de meulage selon l'une des revendications 5 à 7, **caractérisé en ce que** le premier élément (82) possède une section transversale extérieure et/ou intérieure, qui diffère de la forme circulaire et au moyen duquel le premier élément (82) s'applique de manière à être translatable contre le dispositif (40) de retenue de la meule.

9. Dispositif de meulage selon la revendication 9, **caractérisé en ce qu'**une partie du premier élément (82) est plate.

10. Dispositif de meulage selon la revendication 9, **caractérisé en ce que** la partie plate du premier élément (82) est disposée entre une paroi du dispositif (40) de retenue de la meule et une plaque de blocage en rotation (100), qui est reliée au dispositif (40) de retenue de la meule.

11. Dispositif de meulage selon la revendication 9 ou 10, **caractérisé en ce que** le premier élément (82) est disposé entre des barrettes (101) du dispositif (44) de retenue de la meule.

12. Dispositif de meulage selon l'une des revendications précédentes, **caractérisé en ce que** le dispositif d'avance (62) peut être activé et désactivé par la commande de la position d'extrémité de la course de translation du dispositif (40) de retenue de la meule.

13. Dispositif de meulage selon la revendication 12, **caractérisé en ce que** le dispositif (40) de retenue de la meule peut être amené par translation dans une première position d'extrémité (40') et dans une seconde position d'extrémité (40") et que le dispositif d'avance (32) est activé dans la première position d'extrémité (40"), mais n'est pas activé dans la seconde position d'extrémité (40").

14. Dispositif de meulage selon la revendication 12 ou 13, **caractérisé en ce que** le dispositif (40) de retenue de la meule coopère dans la première position d'extrémité (40'), mais pas dans la seconde position d'extrémité (40"), avec un dispositif servant à actionner le dispositif d'avance (62).

15. Dispositif de meulage selon l'une des revendications 12 à 14, **caractérisé en ce que** la commande de la course de translation s'effectue au moyen du nombre d'impulsions d'activation appliquées à un moteur électrique (70), et/ou pendant une durée, pendant laquelle une tension de fonctionnement est appliquée au moteur (70) et/ou au moyen d'une détection de la position du dispositif de retenue de la meule et/ou d'un arbre entraîné en rotation et/ou en translation par un moteur (70) et d'une commande correspondante du moteur (70).

16. Dispositif de meulage selon l'une des revendications précédentes, **caractérisé en ce que** la meule (42) avance dans une direction verticale.

17. Moissonneuse, notamment faucheuse-hacheuse autopropulsée ou tractée, comportant un tambour hacheur (22) et un dispositif de meulage selon l'une des revendications 1 à 16.
